# FASCICULE DE BREVET EUROPEEN

(11) **EP 4 662 429 B1**
(45) Date de publication et mention de la délivrance du brevet: **26.08.2026**
(21) Numéro de dépôt: 24703387.1
(22) Date de dépôt: 08.02.2024
(51) Int. Cl.: F16H 57/04, B64B 1/32

(54) **BOÎTIER DE TRAIN D'ENGRENAGES POUR PROPULSEUR DE BALLON DIRIGEABLE**
ZAHNRADGETRIEBEGEHÄUSE FÜR EIN TRIEBWERK EINES LENKBAREN BALLONS
GEAR TRAIN HOUSING FOR A THRUSTER OF A DIRIGIBLE BALLOON

(30) Priorité: 10.02.2023 FR 2301264
(43) Date de publication de la demande: 17.12.2025
(73) Titulaire: Flying Whales, 92150 Suresnes (FR)
(72) Inventeur: CAYET, Bertrand, 31200 TOULOUSE (FR); NICOLAS, Kévin, 92800 PUTEAUX (FR); GUILLOU, Pierrot, 92700 COLOMBES (FR)
(74) Mandataire: IP Trust
(86) Numéro de dépôt international: PCT/EP2024/053133
(87) Numéro de publication internationale: WO 2024/165655

(56) Documents cités:
- EP-A1- 1 191 259
- EP-A1- 3 088 296
- FR-A- 1 264 769
- FR-A1- 3 036 475
- FR-A1- 3 118 001
- US-B1- 6 196 498

## Description

### DOMAINE TECHNIQUE DE L'INVENTION

La présente invention concerne un boîtier de train d'engrenages pour propulseur de ballon dirigeable, propulseur du type comprenant un pylône et une nacelle portant les équipements nécessaire à la propulsion, ledit boîtier étant agencé pour contenir de l'huile lubrifiant le train d'engrenages comprenant deux parois, chaque paroi délimitant axialement l'enceinte formée par le boîtier, et une paroi intermédiaire cylindrique comprenant un récupérateur d'huile agencée pour pivoter angulairement via des moyens de réglage par rapport audites deux parois de manière à positionner le récupérateur d'huile au point le plus bas ou à un point situé en-dessous du point d'attache entre le pylône et la nacelle du propulseur.

### ETAT DE LA TECHNIQUE

On connaît dans le domaine de la propulsion des ballons dirigeables l'utilisation de propulseurs à hélice fixés sur la cellule se trouvant sous le ballon dirigeable.

En particulier ces propulseurs sont fixés verticalement au regard du ballon, ou de la cellule se trouvant sous le ballon, lorsque celui-ci se situe dans un plan horizontal ou sur un sol plat.

Il est répandu un propulseur comprenant un pylône vertical au bout duquel se situe une nacelle renfermant les équipements de propulsion tels qu'un moteur, un réducteur de vitesse de rotation à train d'engrenages et une hélice. En outre le réducteur nécessite une circulation d'huile qui lubrifie lesdits engrenages. Un récupérateur d'huile est agencé à la base du carter du train d'engrenage afin de récupérer l'huile s'écoulant par gravité.

Le besoin d'accroissement de puissance nécessite la multiplication des propulseurs autour du ballon.

Or la disposition non-verticale d'un propulseur entraîne un décalage angulaire de la nacelle, si bien que le récupérateur d'huile est également décalé angulairement par rapport à la verticale définie par la pesanteur, et ainsi ne peut plus récupérer toute l'huile.

Le document US 6,196,498 B divulgue un dirigeable comprenant un système de propulsion contenant quatre unités de propulsion dont les hélices sont entraînées par des turbomoteurs.

Le document FR 3,036,475 A divulgue un aéronef comprenant au moins un capteur pour mesurer un vent, des actionneurs incluant des moteurs et des gouvernes, et une base de données embarquée associant différentes valeurs de mesure de vent à différentes consignes à l'attention des actionneurs.

Le document EP 191259 A divulgue un dispositif de lubrification d'une boîte de transmission de puissance présentant une orientation variable, en particulier pour un aéronef convertible à rotors basculants.

Le document FR 1264769 A divulgue un réducteur de vitesses pour transmissions mécaniques, orientable en plusieurs positions et avec possibilités multiples d'accouplement et de montage

L'invention vise à remédier au problème de récupération de toute l'huile.

### OBJET DE L'INVENTION

A cet effet, et selon un premier aspect, l'invention propose un boîtier de train d'engrenages pour propulseur de ballon dirigeable, ledit boîtier étant agencé pour contenir de l'huile lubrifiant le train d'engrenages caractérisé en ce qu'il comprend :
- une paroi de nacelle, de préférence disposée à une extrémité proximale du train d'engrenages,
- une paroi de capot, de préférence disposée à une extrémité distale du train d'engrenages,
- une paroi intermédiaire, disposée entre la paroi de nacelle et la paroi de capot, de forme cylindrique et comprenant un récupérateur d'huile sur sa circonférence,
- au moins la paroi de nacelle et la paroi intermédiaire comprennent des moyens de réglage angulaire de manière à régler la position angulaire desdites parois les unes par rapport aux autres.

Le boîtier selon l'invention permet de disposer le récupérateur d'huile au regard de la nacelle du propulseur selon n'importe quelle orientation angulaire du pylône reliant le ballon à la nacelle. Cette solution permet en outre de limiter le nombre de pièces à modifier.

Selon différents perfectionnements pouvant être combinables entre eux, le boîtier peut comprendre l'une ou plusieurs des caractéristiques suivantes :
- la paroi de capot comprend des moyens de réglage angulaire ;
- les moyens de réglage sont des brides, en particulier des moyens de fixation ou de verrouillage d'au moins deux pièces l'une par rapport à l'autre, par exemple des systèmes à arbre et alésage ou des systèmes à rainures ou cannelures ;
- les moyens de réglage comprennent des orifices agencés sur lesdites parois ;
- de préférence, les orifices sont disposés en arc de cercle, de préférence en cercle ;
- la paroi intermédiaire comprend deux épaulements s'étendant radialement, chaque épaulement s'étendant depuis une extrémité axiale de ladite paroi et comprenant les moyens de réglage.

Selon un deuxième aspect, l'invention propose un train d'engrenages pour propulseur de ballon dirigeable comprenant un boîtier selon l'une ou plusieurs des caractéristiques du premier aspect.

Selon un troisième aspect, l'invention propose un ensemble ou un kit comprenant un boîtier selon l'une ou plusieurs des caractéristiques du premier aspect et un jeu de conduits comprenant au moins un conduit agencé pour raccorder le récupérateur d'huile avec une pompe de circulation d'huile équipant le train d'engrenages, et au moins un conduit raccordant ladite pompe avec un système de distribution d'huile sur les engrenages.

Selon un quatrième aspect, l'invention propose un procédé d'assemblage d'un propulseur de ballon dirigeable comprenant un train d'engrenages entouré d'un boîtier selon l'une ou plusieurs des caractéristiques du premier aspect, le procédé comprenant les étapes suivantes :
- fournir ou fabriquer les parois,
- disposer la paroi intermédiaire sur la paroi de nacelle et orienter angulairement, via les moyens de réglage, la paroi intermédiaire de manière à situer le récupérateur d'huile au point le plus bas.

De préférence, le procédé peut prévoir en outre les étapes suivantes :
- raccorder au moins un conduit, de préférence de longueur ajustée, entre le récupérateur d'huile et une pompe de circulation d'huile équipant le train d'engrenages, et
- raccorder au moins un conduit, de préférence de longueur ajustée, entre ladite pompe et un système de distribution d'huile sur les engrenages.

On entend par longueur ajustée, une longueur égale ou correspondant à l'écartement entre les deux pièces visées et une longueur de jeu fonctionnel.

Le procédé peut en outre prévoir la disposition de la paroi de capot sur la paroi intermédiaire, de manière à fermer le réducteur ou fermer l'enceinte dans laquelle le train d'engrenages se situe.

### BREVE DESCRIPTION DES FIGURES

D'autres caractéristiques et avantages de l'invention ressortiront de la description détaillée de l'invention qui va suivre en référence aux figures annexées et dans lesquelles :
[Fig.1] La [Fig.1] est une vue de face d'un ballon dirigeable selon un mode de réalisation comprenant plusieurs propulseurs à hélice disposés latéralement et espacés angulairement ;
[Fig.2] La [Fig.2] représente deux vues en perspective d'un propulseur à hélice selon un mode de réalisation comprenant un pylône, une nacelle et des moyens motoréducteurs, la figure 2a présentant un propulseur disposé verticalement et la figure 2b présentant un propulseur disposé selon un angle non-nul par rapport à la verticale ;
[Fig.3] La [Fig.3] est une vue de face d'un propulseur disposé verticalement selon un mode de réalisation montrant une paroi de capot comprenant des moyens de réglage angulaire ;
[Fig.4] La [Fig.4] est une vue de face d'un propulseur disposé selon un angle non-nul par rapport à la verticale selon un mode de réalisation montrant une paroi de capot comprenant des moyens de réglage angulaire.

Pour plus de clarté, les éléments identiques ou similaires des différents modes de réalisation sont repérés par des signes de référence identiques sur l'ensemble des figures.

### DESCRIPTION DETAILLEE DE L'INVENTION

La figure présente selon un mode de réalisation une disposition de plusieurs propulseurs 200 à hélice autour de l'enveloppe d'un ballon dirigeable 100 vu de face. Il est représenté six propulseurs 200 de chaque côté latéral du ballon. De préférence, les propulseurs latéraux s'étendent dans un plan transversal à l'axe longitudinal du ballon. Les propulseurs sont espacés l'un de l'autre de quelques degrés angulaires. Le premier propulseur latéral s'étend selon un angle compris entre 50 et 80 degrés par rapport à la verticale P définie par la direction de la pesanteur et par rapport au sommet du ballon. En outre, d'autres propulseurs sont visibles selon d'autres plans d'inclinaison.

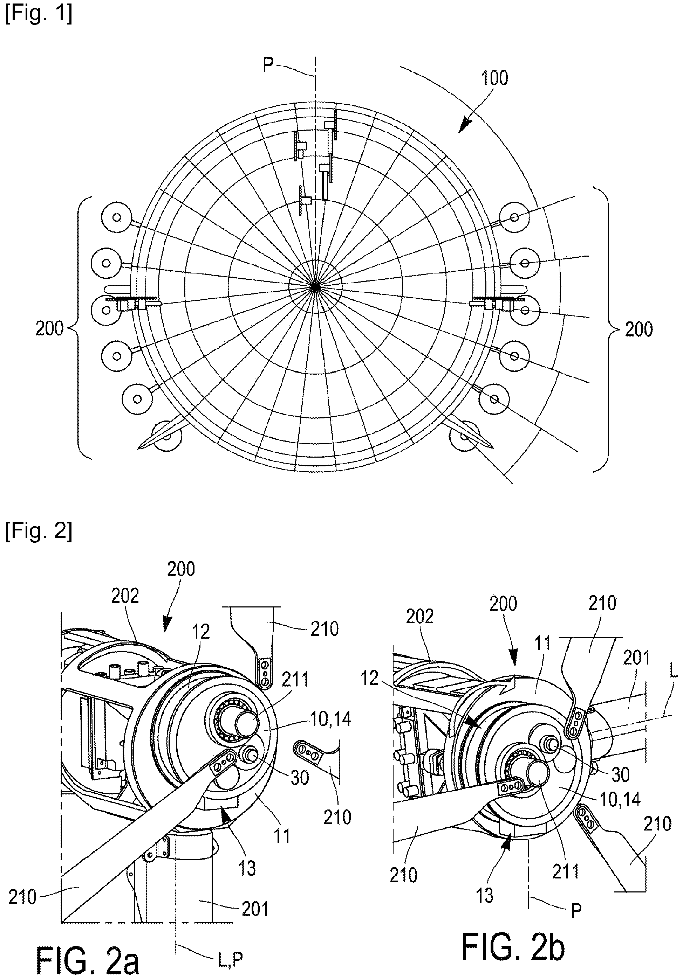

En relation avec les figures 2a, 2b, 3 et 4, il est décrit un mode de réalisation d'un boîtier de train d'engrenages pour propulseur à hélice d'un ballon dirigeable.

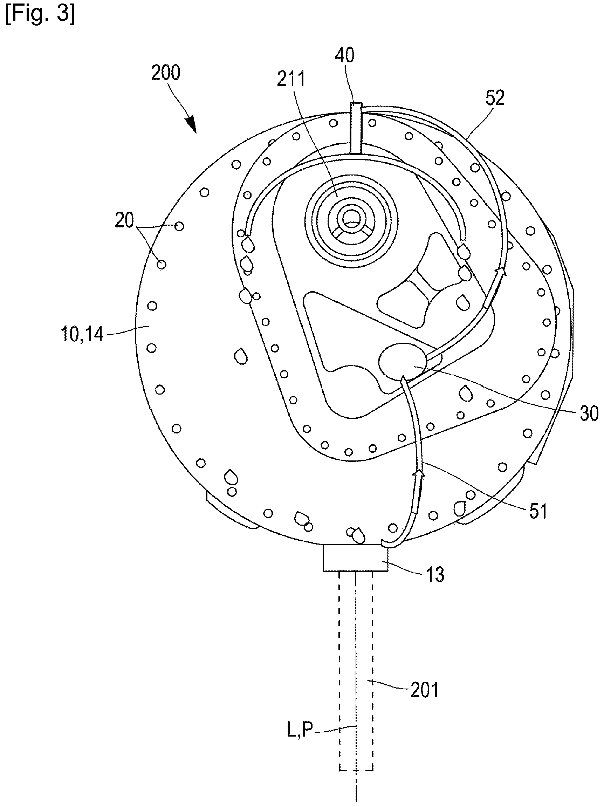

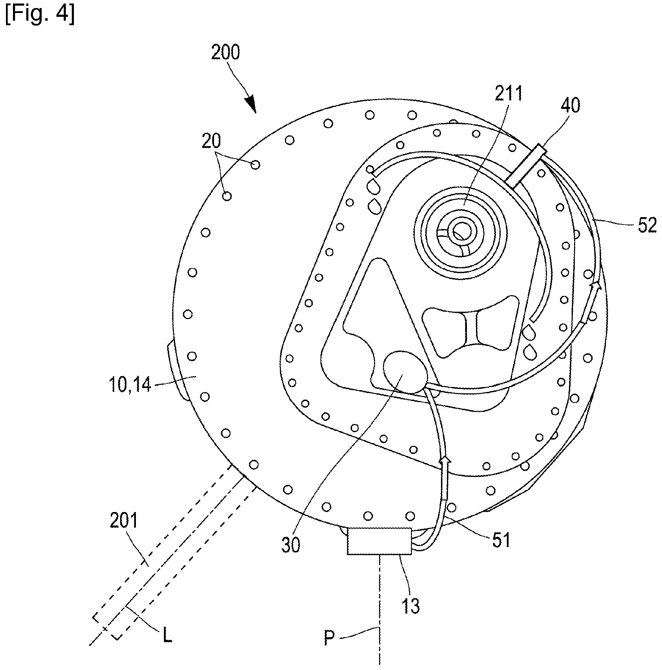

Le propulseur à hélice 200 comprend un pylône 201 et une nacelle 202. La nacelle 202 comprend ou porte les moyens motoréducteur et les moyens propulsifs. Le pylône 201 raccorde la nacelle 202 au ballon dirigeable 100. En référence à la [Fig.1], le pylône 201 s'étend radialement par rapport à la direction ou l'axe longitudinal du ballon. En référence aux figures 2a et 3, l'axe longitudinal du pylône L s'étend verticalement selon la direction de la pesanteur P. En référence aux figures 2b et 4, l'axe longitudinal du pylône L s'étend selon une direction présentant un angle non-nul par rapport à la verticale définie par la direction de la pesanteur P.

En référence aux figures 2a et 2b, le propulseur 200 comprend des pales 210 vues de manière détachée par rapport à l'arbre d'hélice 211 pour visualiser davantage le boîtier 10. Entre outre, le propulseur comprend un réducteur de vitesse de rotation de l'arbre moteur (non visible) disposé entre l'arbre moteur et l'arbre d'hélice. Le propulseur comprend un boîtier 10 définissant une enceinte dans laquelle se trouvent le train d'engrenages du réducteur et un système de distribution de lubrifiant. Le boîtier 10 se situe sur une face avant de la nacelle 202.

Selon le mode de réalisation proposé, le boîtier 10 comprend :
- une paroi de nacelle 11,
- une paroi de capot 14, et
- une paroi intermédiaire 12 disposée entre la paroi de nacelle 11 et la paroi de capot 14.

De préférence, le boîtier 10 présente une forme circulaire, de manière préférentielle chaque paroi présente une forme circulaire.

Selon un mode de réalisation, la paroi de nacelle présente la forme d'un flasque, en particulier d'un disque distinct de la face avant de la nacelle. Selon un autre mode de réalisation, la paroi de nacelle est confondue avec la face avant de la nacelle.

De préférence, la paroi de capot 14 présente la forme d'un flasque, en particulier d'un disque, disposé en extrémité axiale du réducteur.

De manière préférentielle, la paroi intermédiaire 12 présente la forme d'un tube circulaire.

En outre le boîtier 10 comprend un récupérateur 13 de lubrifiant, en particulier d'huile. Le récupérateur d'huile 13 est en communication fluidique avec l'enceinte du boîtier de sorte que l'huile peut s'écouler le long des faces internes audites parois jusqu'au récupérateur, la paroi intermédiaire agissant comme un anneau de récupération d'huile.

Le boîtier 10 comprend des moyens de réglage angulaire du récupérateur d'huile 13 autour du train d'engrenages. En référence aux figures 3 et 4, les moyens de réglage angulaire comprennent des orifices 20 agencés sur la périphérie des parois et espacés angulairement de quelques degrés ; les orifices des parois de nacelle et intermédiaire ne sont pas visibles.

De préférence, le récupérateur d'huile 13 est raccordé à la paroi intermédiaire 12. Selon un mode de réalisation non représenté, la paroi intermédiaire comprend deux collerettes, chaque collerette étant à une extrémité axiale de la paroi. De préférence, chaque collerette présente des moyens de réglage angulaire, par exemple des orifices espacés angulairement.

Lors de l'assemblage du boîtier, la paroi intermédiaire peut être disposée selon une orientation angulaire désirée au regard de la paroi de nacelle. Puis la paroi de capot peut être disposée sur la paroi intermédiaire pour fermer l'enceinte du boîtier, de manière indifférente à la position de la paroi intermédiaire.

Lors de l'assemblage d'un propulseur, il est alors possible de régler la position angulaire du récupérateur d'huile de manière à ce qu'il se situe au point le plus bas et ainsi récupérer une quantité maximale possible d'huile. Par exemple en référence aux figures 2b et 4 le récupérateur d'huile 13 se situe en-dessous du point le plus bas de la paroi de capot 14 et également en-dessous du point de raccordement entre le pylône 201 et la nacelle.

Les positions angulaires des parois peuvent être verrouillées par des moyens de verrouillage connus de la personne du métier, par exemple par vissage.

En référence aux figures 3 et 4, l'huile récupérée peut être pompée par une pompe à huile 30 via des conduits 51 et 52 pour être redistribuée via un système de distribution 40.

Par soucis d'économie, il est possible d'ajuster la longueur des conduits d'huile 51, 52 ; la longueur d'écartement entre le récupérateur d'huile et la pompe à huile d'une part, et/ou la longueur d'écartement entre la pompe à huile et le système de distribution d'autre part pouvant évoluer selon le décalage angulaire du récupérateur d'huile et/ou le positionnement de la pompe à huile et du système de distribution.

Bien entendu l'invention n'est pas limitée au(x) mode(s) de mise en œuvre décrit(s) et on peut y apporter des variantes de réalisation sans sortir du cadre de l'invention tel que défini par les revendications.

## Revendications

1. Boîter (10) de train d'engrenages pour propulseur (200) de ballon dirigeable (100), ledit boîtier étant agencé pour contenir de l'huile lubrifiant le train d'engrenages, comprenant :
- une paroi de nacelle (11),
- une paroi de capot (14),
**caractérisé en ce qu'**il comprend en outre une paroi intermédiaire (12), disposée entre la paroi de nacelle (11) et la paroi de capot (14), de forme cylindrique et comprenant un récupérateur d'huile (13) sur sa circonférence,
au moins la paroi de nacelle et la paroi intermédiaire comprenant des moyens de réglage angulaire (20) de manière à régler la position angulaire desdites parois les unes par rapport aux autres.

2. Boîtier selon la revendication précédente, dans lequel la paroi de capot (14) comprend des moyens de réglage angulaire.

3. Boîtier selon l'une des revendications précédentes, dans lequel les moyens de réglage sont des brides.

4. Boîtier selon l'une des revendications précédentes, dans lequel les moyens de réglage comprennent des orifices (20) agencés sur lesdites parois.

5. Boîtier selon la revendication précédente, dans lequel les orifices sont disposés en arc de cercle, de préférence en cercle.

6. Boîtier selon l'une des revendications précédentes, dans lequel la paroi intermédiaire (12) comprend deux épaulements s'étendant radialement, chaque épaulement s'étendant depuis une extrémité axiale de ladite paroi et comprenant les moyens de réglage angulaire.

7. Train d'engrenages pour propulseur de ballon dirigeable comprenant un boîtier (10) selon l'une des revendications précédentes.

8. Ensemble comprenant un boîtier (10) selon l'une des revendications précédentes et un jeu de conduits (50) comprenant au moins un conduit (51) agencé pour raccorder le récupérateur d'huile (13) avec une pompe (30) de circulation d'huile équipant le train d'engrenages, et au moins un conduit (52) raccordant ladite pompe avec un système de distribution d'huile (40) sur les engrenages.

9. Procédé d'assemblage d'un propulseur de ballon dirigeable comprenant un train d'engrenages entouré d'un boîtier (10) selon l'une des revendications 1 à 6, le procédé comprenant les étapes suivantes :
- fournir ou fabriquer les parois (11, 12, 14),
- disposer la paroi intermédiaire (12) sur la paroi de nacelle (11) et orienter angulairement, via les moyens de réglage angulaire (20), la paroi intermédiaire de manière à situer le récupérateur d'huile (13) au point le plus bas.

10. Procédé selon la revendication précédente, comprenant les étapes suivantes :
- raccorder au moins un conduit (51) de longueur ajustée entre le récupérateur d'huile (13) et une pompe de circulation d'huile (30) équipant le train d'engrenages, et
- raccorder au moins un conduit (52) (de longueur ajustée) entre ladite pompe et un système de distribution d'huile (40) sur les engrenages.

## Patentansprüche

1. Getriebegehäuse (10) für einen Antrieb (200) eines Luftschiffs (100), wobei das Gehäuse dazu ausgelegt ist, Schmieröl für das Getriebe aufzunehmen, umfassend:
- eine Gondelwand (11),
- eine Haubenwand (14),
**dadurch gekennzeichnet, dass** es weiter eine Zwischenwand (12) umfasst, die zwischen der Gondelwand (11) und der Haubenwand (14) angeordnet ist, eine zylindrische Form aufweist und an ihrem Umfang einen Ölauffänger (13) umfasst, wobei zumindest die Gondelwand und die Zwischenwand Winkelverstellmittel (20) aufweisen, um die Winkelstellung dieser Wände zueinander einzustellen.

2. Gehäuse nach dem vorstehenden Anspruch, wobei die Haubenwand (14) Winkelverstellmittel aufweist.

3. Gehäuse nach einem der vorstehenden Ansprüche, wobei die Verstellmittel Flansche sind.

4. Gehäuse nach einem der vorstehenden Ansprüche, wobei die Verstellmittel (20) Öffnungen umfassen, die an den genannten Wänden angeordnet sind.

5. Gehäuse nach dem vorstehenden Anspruch, wobei die Öffnungen bogenförmig, vorzugsweise kreisförmig, angeordnet sind.

6. Gehäuse nach einem der vorstehenden Ansprüche, wobei die Zwischenwand (12) zwei sich radial erstreckende Schultern aufweist, wobei sich jede Schulter von einem axialen Ende der genannten Wand aus erstreckt und die Winkelverstellmittel umfasst.

7. Getriebe für einen Antrieb eines Luftschiffs, umfassend ein Gehäuse (10) nach einem der vorstehenden Ansprüche.

8. Anordnung, umfassend ein Gehäuse (10) gemäß einem der vorstehenden Ansprüche und einen Satz von Leitungen (50), der mindestens eine Leitung (51) umfasst, die dazu ausgelegt ist, den Ölauffänger (13) mit einer Ölumwälzpumpe (30) zu verbinden, mit der das Getriebe ausgestattet ist, sowie mindestens eine Leitung (52), die die genannte Pumpe mit einem Ölverteilungssystem (40) für die Zahnräder verbindet.

9. Verfahren zum Zusammenbau eines Antriebs für einen Luftschiffballon, der ein von einem Gehäuse (10) umgebenes Getriebe umfasst, nach einem der Ansprüche 1 bis 6, wobei das Verfahren die folgenden Schritte umfasst:
- die Wände (11, 12, 14) bereitzustellen oder herzustellen,
- die Zwischenwand (12) auf die Gondelwand (11) aufzusetzen und die Zwischenwand mithilfe der Winkelverstellmittel (20) so auszurichten, dass sich der Ölauffänger (13) am tiefsten Punkt befindet.

10. Verfahren nach dem vorstehenden Anspruch, umfassend die folgenden Schritte:
- mindestens eine Leitung (51) mit angepasster Länge zwischen dem Ölauffänger (13) und einer im Getriebe eingebauten Ölumwälzpumpe (30) anzuschließen, und
- mindestens eine Leitung (52) (mit angepasster Länge) zwischen der genannten Pumpe und einem Ölverteilungssystem (40) am Getriebe anzuschließen.

## Claims

1. Gear train casing (10) for a thruster (200) of a dirigible balloon (100), said casing being arranged so as to contain oil lubricating the gear train, comprising:
- a nacelle wall (11),
- a cowl wall (14),
**characterised in that** it further comprises an intermediate wall (12), disposed between the nacelle wall (11) and the cowl wall (14), of cylindrical shape and comprising an oil scavenge (13) on its circumference,
at least the nacelle wall and the intermediate wall comprising angular adjustment means (20) so as to adjust the angular position of said walls relative to one another.

2. Casing according to the preceding claim, wherein the cowl wall (14) comprises angular adjustment means.

3. Casing according to one of the preceding claims, wherein the adjustment means are flanges.

4. Casing according to one of the preceding claims, wherein the adjustment means comprise orifices (20) arranged on said walls.

5. Casing according to the preceding claim, wherein the orifices are disposed in an arc of circle, preferably in a circle.

6. Casing according to one of the preceding claims, wherein the intermediate wall (12) comprises two shoulders extending radially, each shoulder extending from an axial end of said wall and comprising said angular adjustment means.

7. Gear train for a dirigible-balloon thruster comprising a casing (10) according to one of the preceding claims.

8. Assembly comprising a casing (10) according to one of the preceding claims and a set of ducts (50) comprising at least one duct (51) arranged to connect the oil scavenge (13) with an oil circulation pump (30) equipping the gear train, and at least one duct (52) connecting said pump with a system (40) for distributing oil on the gears.

9. Method for assembling a dirigible balloon thruster comprising a gear train surrounded by a casing (10) according to one of claims 1 to 6, the method comprising the following steps:
- providing or manufacturing the walls (11, 12, 14),
- arranging the intermediate wall (12) on the nacelle wall (11) and angularly orienting, via the angular adjustment means (20), the intermediate wall so as to locate the oil scavenge (13) at the lowest point.

10. Method according to the preceding claim, comprising the following steps:
- connecting at least one duct (51) with an adjusted length between the oil scavenge (13) and an oil circulation pump (30) equipping the gear train, and
- connecting at least one duct (52) (of adjusted length) between said pump and a system (40) for distributing oil on the gears.
